# EUROPEAN PATENT SPECIFICATION

(11) **EP 4 495 395 B1**
(45) Date of publication and mention of the grant of the patent: **13.08.2025**
(21) Application number: 23185780.6
(22) Date of filing: 17.07.2023
(51) Int. Cl.: F01N 3/00

(54) **INTERNAL COMBUSTION ENGINE**
BRENNKRAFTMASCHINE
MOTEUR À COMBUSTION INTERNE

(43) Date of publication of application: 22.01.2025
(73) Proprietor: WinGD Ltd., 8400 Winterthur (CH)
(72) Inventor: Schmid, Andreas, 4247 Grindel (CH)
(74) Representative: Hepp Wenger Ryffel AG

(56) References cited:
- JP-A- 2014 100 696
- US-A1- 2012 023 947

## Description

The present invention is directed to an internal combustion engine having at least one cylinder, preferably a large vessel engine with at least one cylinder having an inner diameter of at least 200mm, and to a method for operating an internal combustion engine.

The invention relates to the technical field of combustion engines and the reduction of their emissions.

The present invention preferably relates to an internal combustion engine like a large marine or ship engine or a stationary engine whose cylinders have an inner diameter of at least 200 mm. The engine preferably is a two-stroke engine or a two-stroke cross head engine. The engine can be a gas engine, a dual fuel or a multi fuel engine. Fuel can be gases like liquid natural gas (LNG) liquid petrol gas (LPG) and so on.

In particular, the present invention is related to combustion engines which use LNG as a fuel.

Burning of liquid and or gaseous fuels in such engines is possible as well as self-igniting or forced igniting.

The internal combustion engine can be a longitudinally flushed two-stroke engine.

Engine speed is preferably below 800 RPM, especially for 4-stroke engines, and more preferably below 200 RPM, especially for 2-stroke engines, which indicates the designation of low-speed engines.

Large ships, in particular vessels for transport of goods, usually are powered by internal combustion engines.

The exhaust from the combustion process needs to be cleaned to comply with the existing rules such as IMO Tier III.

The International Maritime Organization (IMO) sulfur limit regulations have prompted shipowners to find new alternative energy sources. There are ships that use liquefied natural gas (LNG) as fuel, called "LNG powered ships." The main component of LNG is methane. The combustion of methane will produce CO2 and water.

Therefore, LNG as a marine fuel can reduce harmful gases such as sulfides emissions. However, there is still emission of CO₂, which also has a great impact on the environment as it is the main gas that causes the greenhouse effect. In 2018, the IMO formulated a preliminary strategy for reducing greenhouse gas emissions. It plans to reduce carbon emissions from the international shipping industry and to continue to move towards the goal of zero carbon.

LNG has to be stored at low temperature and has to be vaporized before it is supplied to the main engine of the ship for combustion. During regasification the LNG releases 830kJ/kg of residual cold energy. For example, from CN112833325A, CN217273515U or CN110513194A it is known to use the cold energy of LNG for liquefying CO₂ that can then be made into dry ice.

Recapturing of CO₂ may not only solve the problem of the greenhouse effect caused by excessive CO₂ release on the environment when LNG is burned as a marine fuel, but may also solve the problem of excess cold energy on LNG-powered ships by utilization the cold energy. The reduction of power consumption of refrigeration equipment in the dry ice process saves costs and realizes energy saving and emission reduction.

Known systems often use CO₂ absorption and separation units, being provided with an absorption liquid for example a mixture of a ionic liquid and an organic amine alcohol solution. Separation units need additional space and increase the complexity of the engine design.

It is also known to use the process of cryogenic carbon capture, wherein carbon is separated from the exhaust gas by controlling phase changes via temperature and pressure modulations, particularly using CO₂ solidification extraction. CO₂ solidification extraction usually is very energy consuming.

JP2014100696 A discloses a method and apparatus for solidifying, separating, capturing, and storing CO2 in exhaust gas from a ship engine using cold of LNG.

It is therefore an object of the present invention to prevent the drawbacks of the prior art and in particular to create an internal combustion engine and a method for operating an engine, provide for a reduction of CO₂ emission with a reasonable effort.

The object is achieved by an internal combustion engine and a method for operating an internal combustion engine according to the independent claims.

The internal combustion engine has at least one cylinder and preferably is a large vessel engine with at least one cylinder having an inner diameter of at least 200mm. The internal combustion engine comprises an LNG supply system having an LNG tank for hosting LNG, preferably at a temperature of below -150°C. The LNG tank may be suitable for hosting pressurized LNG.

The internal combustion engine comprises an exhaust gas cooling system having a first, a second and third cooling stage for successive cooling down exhaust gas.

The first cooling stage may be adapted to use water, for example sea water, as a cooling medium and to cool the exhaust gas to a temperature level which corresponds to the temperature of the sea water, typically to a temperature of below 30°C. The first cooling stage may comprise at least one first stage heat exchanger having an inlet and an outlet for guiding water.

The first stage heat exchanger may comprise shell and tubes, may use direct contact cooling, or indirect gas/liquid cooling.

Upstream of the first stage the exhaust gas stream may be split such that only a certain portion of it is guided from the cylinder into the exhaust gas cooling system.

The exhaust gas cooling system may comprise further devices upstream the first cooling stage, for example emission abatement systems, such as an SCR, or a heat recovery steam generator and/or a duct firing alkie, which may affect the exhaust gas temperature.

The exhaust gas cooling system comprises a second cooling stage for cooling exhaust gas arranged downstream the first cooling stage. The second cooling stage comprises at least one second stage heat exchanger. The second cooling stage may be adapted to cool the exhaust gas to a temperature of below -100°C, preferable to a temperature in a range from -110°C to -100°C.

The cooling temperature of the second cooling stage is determined by the initiation of desublimation (coming from higher temperatures to lower ones), which depends on the CO2 content in the exhaust gas.

The second stage heat exchanger may comprise shell and tubes, may use direct contact cooling, or indirect gas/gas or gas/liquid cooling.

The exhaust gas cooling system comprises a third cooling stage for further cooling exhaust gas, arranged downstream the second cooling stage. The third cooling stage may be adapted to cool the exhaust gas to a temperature below -106°C, preferable to a temperature in a range from -140°C to -106°C, more preferable to a temperature in a range from -125°C to -106°C. In the third cooling stage CO₂ is frozen out from the exhaust gas, and frozen CO₂ is separated from residual exhaust gas.

The lower temperature boundary is related to the remaining CO₂ concentration in the residual exhaust gas.

Residual exhaust gas is the exhaust gas leaving the exhaust gas which leaves the third cooling stage, which has a considerable reduced CO2 concentration as compared to the exhaust gas leaving the cylinder.

The third cooling stage comprises at least one third stage heat exchanger having a first outlet for frozen CO₂ and a second outlet for residual exhaust gas.

When an indirect heat exchanger is used frozen CO₂ may be produced in the form of solid ice, and when a direct contact cooler is used, frozen CO₂ may be evacuated as a slurry.

In the direct contact cooler, the exhaust gas may be cooled in a direct contact with a cooling fluid, typically a liquid mixture, e.g. a water-alcohol or water-glycol mixture, which does not freeze at the temperature of the third cooling stage. As result, CO₂ may be separated in a form of solvent-based slurry, which can be easily pumped away and can be separated outside the heat exchanger. For separation the slurry may be guided into a cyclone or pure CO₂ may evaporate and be re-condensed.

Alternatively, CO₂ may de-sublimate on a contact surface of a heat exchanger and may be removed mechanically.

Frozen CO₂ may be removed in a batch process, wherein for example a part of the heat exchanger is used for freezing CO₂, whereas the other part is cleaned from frozen CO₂.

The outlet for frozen CO₂ may be adapted to evacuate the frozen CO₂ as a free flowing/falling slurry and/or may comprise mechanical means for the transport of ice, such as a conveyor belt or a screw conveyor.

Frozen CO₂ may be evacuated continuously or in a batch mode, wherein de-sublimation and evacuation may alternate.

The third cooling stage is adapted to at least partially decar-bonate the exhaust gas, for example by 25%-30%. Typically, residual partially decarbonated exhaust gas leaving the third cooling stage still has a certain carbon concentration.

The third stage heat exchanger may comprise shell and tubes, may use direct contact cooling, or indirect gas/gas or gas/liquid cooling.

At least one of the at least one second stage heat exchanger and/or at least one of the at least one third stage heat exchanger are adapted to use cold energy of LNG released from the LNG tank.

Within this application using cold energy of a gas or liquid means that the gas or liquid is warmed up by another gas or liquid (while the other gas or liquid is cooled down) either directly in the same heat exchanger or indirectly, for example via a cooling agent.

LNG can be used directly as a cooling medium in the second stage heat exchanger and/or in the third stage heat exchanger. Alternatively, an intermediate cooling agent may be used which is cooled by the LNG and transferred into the second stage heat exchanger and/or in the third stage heat exchanger.

The lower the target concentration, the higher is the effort for removing the CO₂.

Preferably, only the cold energy of the LNG is used to further cool down the exhaust gas precooled in the first cooling stage. No additionally energy is spent. Using exclusively the cold energy of the LNG provides for freezing out only a part of the CO₂ of the exhaust gas. This way, a considerable amount of CO₂ can be removed from the exhaust gas very effectively.

CO₂ does not have to be separated from the exhaust gas upstream the third cooling stage. As CO₂ freezes out in the third cooling stage before other components of the exhaust gas freeze, there is an automatic separation of CO₂ from the residual exhaust gas the third cooling stage. The frozen CO₂ just may be removed from the third cooling stage.

Due to the relation of latent heat of LNG evaporation and latent heat of CO₂ de-sublimation, 1kg of LNG theoretically can freeze out 0.86kg of CO₂, which corresponds to approximately 30% of CO₂ resulting from the combustion.

The LNG supply system and the exhaust gas cooling system interconnected as described above provide an effective system for partial decarbonization.

Partially decarbonized exhaust gas is a mixture of N₂, Oxygen, Argon and residual CO₂, with an Oxygen content lower than that of air.

Residual exhaust gas may be discharged into the environment or may be fully or partially recirculated into the engine air intake.

If necessary, the internal combustion engine may comprise a further stage, wherein the residual exhaust gas and/or exhaust gas split off upstream of the first cooling stage may be decarbonized, for example by separating CO₂ and/or further cooling with an additional energy expenditure, in order to completely decarbonize the exhaust gas.

The LNG supply system may comprise a low temperature heat exchanger, wherein the low temperature heat exchanger may be one of the at least one third stage heat exchanger and/or may be in thermal contact with at least one of the at least one third stage heat exchanger via a cooling agent.

LNG may be evaporated in the low temperature heat exchanger. Typically, for storage LNG is compressed to a pressure corresponding to the saturation pressure at a coolant temperature, which is below the de-sublimation temperature of CO₂, preferably by 5°C to 30°C, more preferably by 10°C to 20°C.

In the low temperature heat exchanger LNG may be heated up to the evaporation temperature and may be evaporated.

The LNG may be heated up and/or evaporated on the coolant side of at least one of the at least one third stage heat exchanger or in at least one of the at least one third stage heat exchanger.

The LNG supply system may comprise an upper temperature heat exchanger, wherein the upper temperature heat exchanger is one of the at least one second stage heat exchanger and/or is in thermal contact with at least one of the at least one second stage heat exchanger via a cooling agent.

In the upper temperature heat exchanger LNG may be heated up to a temperature of -40°C to 20°C, such that the LNG may be supplied to the cylinder, preferably after having compressed.

The upper temperature heat exchanger may be arranged downstream the low temperature heat exchanger with respect to the flow direction of the LNG from the storage tank to the cylinder.

The upper temperature heat exchanger may be arranged upstream the low temperature heat exchanger with respect to the flow direction of exhaust gas from the cylinder.

The presence of the second cooling stage and the third cooling stage of the cooling system as well as the corresponding low temperature heat exchanger and upper temperature heat exchanger of the LNG supply system represents a two-step system for partial decarbonization and provides for some flexibility in setting the rate of decarbonization.

The LNG supply system may comprise a piping system with a branch, for directly connecting the LNG tank selectively to the low temperature heat exchanger and/or to the upper temperature heat exchanger.

The piping system may comprise settable valves. The internal combustion engine may comprise a control unit for setting the valves and for controlling the amount of LNG to be guided to the low temperature heat exchanger and/or to the upper temperature heat exchanger.

Depending on the concentration of CO₂ and humidity of the exhaust gas the upper sublimation point may vary. In order to thermally balance the first and the second cooling stage, a part of the LNG may bypass low temperature heat exchanger and may be guided to the upper temperature heat exchanger. LNG released from the storage tank may be admixed to the gaseous LNG released from the low temperature heat exchanger upstream of the upper temperature heat exchanger or in the upper temperature heat exchanger.

The piping system provides for setting the amount of cold energy supplied to the low temperature heat exchanger and/or to the upper temperature heat exchanger.

The exhaust gas cooling system may comprise an exhaust piping system with a bypass for the first, the second and/or the third cooling stage. The exhaust piping system may comprise settable valves. The internal combustion engine may comprise a control unit for setting the valves, preferably the same control unit as described above, and for controlling the amount of exhaust to be guided to the first, the second and/or the third cooling stage. For example, in case the storage tank for frozen CO₂ is full, no more CO₂ shall be de-sublimated.

The second cooling stage may comprise at least one further heat exchanger which is adapted to use cold energy of the frozen CO₂, released from the third cooling stage, or pressurized liquid CO₂.

Alternatively, the at least one second stage heat exchanger is adapted to use cold energy of LNG and frozen CO₂ released from the third cooling stage.

Frozen CO₂ may be heated up in the second cooling stage to a temperature appropriate for storing.

According to the invention, the exhaust gas cooling system comprises a residual gas piping system for allowing residual exhaust gas leaving the third cooling stage to be guided into the second cooling stage, such that cold energy from the residual exhaust gas leaving the third cooling stage may be used in the second cooling stage, in particular before the residual exhaust is released into he environment.

The residual gas piping system may comprise at least one pipe for guiding gas for the third cooling stage to the second cooling stage.

The residual gas piping system may comprise settable valves. The internal combustion engine may comprise a control unit for setting the valves, preferably the same control unit as describe above, and for controlling the amount of residual gas to be guided to the second cooling stage.

The second cooling stage may comprise at least one further heat exchanger which is adapted to use cold energy of the residual exhaust gas released from the third cooling stage.

Alternatively, the at least one second stage heat exchanger is adapted to use cold energy of LNG and residual gas released from the third cooling stage.

The exhaust gas cooling system may comprise a dehumidification device. Preferably at least one dehumidification device is fluidly arranged between the first and the second stage.

After cooling down the exhaust gas in the first cooling stage, the exhaust gas may typically contain 30g/m³ of saturated steam and water droplets. The humidity should be reduced or removed before cooling the exhaust gas below 5°C. The presence of water or steam in the exhaust gas is disadvantageous, as humidity may cause icing in the gas paths.

The dehumidification device may be adapted to remove humidity from exhaust gas released from the first stage and upstream the second cooling stage and thus before the exhaust gas is cooled to the freezing temperature of water.

The dehumidification device may be adapted to remove humidity thermally in at least on heat exchanger, for example using cold energy of decarbonized residual exhaust has and/or gaseous LNG.

The dehumidification device may be adapted to remove humidity via a specific refrigeration cycle for condensing and freezing out.

The dehumidification device may be adapted to remove humidity by chemical drying the exhaust gas.

The dehumidification device may comprise a direct contact cooler with an anti-freeze liquid.

The internal combustion engine may comprise a split device for branching off exhaust gas not to be guided into the exhaust gas cooling system. The split device may be part of an EGR (exhaust gas recirculation) system.

The split device may comprise a T-connection and valves, preferably settable valves, such that the amount of exhaust gas to be guided into the exhaust gas cooling system is settable by a control unit, preferably by the same control unit as mentioned above.

The amount of the exhaust gas guided into the exhaust gas cooling system may adapted to the capacity of the exhaust gas cooling system. For example, as only up to 30% of the total amount of CO₂ can be extracted, up to 30% of the total amount of exhaust gas is guided into the exhaust gas cooling system.

The internal combustion engine may comprise a EGR (exhaust gas recirculation) system, preferably adapted to branch off exhaust gas upstream the first cooling stage, more preferably a low pressure EGR system.

The EGR system may be adapted to recirculate 0-60%, preferably 35%-55% of the exhaust gas back to the combustion cylinder. The amount of exhaust gas to be decarbonized may be reduced whereas the concentration of CO₂ in the exhaust gas may be increased, which provides for an even higher efficiency of the system for partial decarbonization.

Downstream the cylinder there may be three streams of exhaust gas. One may be returned to the air intake by the EGR, another one may be sent into the exhaust gas cooling system, a third one may be just discharged into the environment.

The internal combustion engine may comprise a cryogenic CO₂ storage tank, preferably adapted to store CO₂ released from the third cooling stage at a temperature close to the triple point.

The cryogenic CO₂ storage tank may be adapted to provide a pressure from 5.2 bar to 10 bar, and a temperature from -56°C to -40°C.

The LNG tanks may be used to store the frozen CO₂ and/or relique-fied CO₂, provided that they are qualified to be used at pressure up to 10bar, e.g. so called type C-LNG tanks.

While the LNG tank releases LNG it may receive CO₂. The LNG tank may comprise separated compartments for hosting LNG and CO₂.

The exhaust gas cooling system including the exhaust gas heat exchangers of the second and the third cooling stage may take a volume of less than 40m³, preferably of less than 30m³.

Thus, such an exhaust gas cooling system may be arranged in an engine compartment and may even be retrofitted for an existing combustion engine.

The object is also achieved by a method for operating an internal combustion engine having at least one cylinder, preferably a large vessel engine with at least one cylinder having an inner diameter of at least 200mm, preferably as described above. The internal combustion engine is powered by LNG and comprises an LNG tank for hosting LNG at a temperature of below -150°C.

The method comprises the step of cooling exhaust gas expelled from the cylinder in a first cooling stage, preferably to a temperature of 20°C - 30°C, preferably using water, for example sea water, as a cooling medium.

Subsequently the exhaust gas is cooled in a second cooling stage comprising at least one second stage heat exchanger, preferably to a temperature of below -100°C, preferable to a temperature in a range from -110°C to -100°C.

Subsequently the exhaust gas is cooled in a third cooling stage comprising at least one third stage heat exchanger, preferably to a temperature of below -106°C, preferable to a temperature in a range from -140°C to -106°C. In the third cooling stage CO₂ is frozen out the exhaust gas and frozen CO₂ is separated from residual exhaust gas, wherein the CO₂ concentration of the residual exhaust gas may be reduced by at least 25%, preferably by at least 30%.

The residual exhaust gas may have a CO₂ concentration of less than 8% (molar centration).

In the third cooling stage exhaust gas may be cooled from the upper de-sublimation temperature which corresponds to the temperature of CO₂ at the initial partial pressure to the lower the lower de-sublimation temperature. The CO₂ capturing rate depends on the percentage of exhaust guided through the exhaust gas cooling system, the initial CO₂ concentration of the exhaust when leaving the cylinder and the temperature of the third cooling stage.

At least one of the at least one second stage heat exchanger and/or at least one of the at least one first stage heat exchanger uses cold energy of LNG released from the LNG tank.

In the third cooling stage that not all CO2 is frozen out, but the method only consumes a low amount of energy, as only the cold energy of the LNG is used.

Preferably, only a portion of the exhaust gas may be guided through the exhaust gas cooling system, whereas the other part may be recirculated or not be fully cooled, in order to reduce the size of the heat exchangers.

The percentage of the exhaust gas guided through the exhaust gas cooling system and the size of the exhaust gas cooling system may be adapted in order to achieve a certain residual CO2 concentration.

A higher flow of exhaust gas results in a higher residual CO2 concentration. To achieve a lower CO2 in the residual gas, a deeper and/or an additional cooling may be provided.

Preferably, LNG is guided through at least one of the at least one second stage heat exchanger and/or at least one the at least one third stage heat exchanger. Additionally or alternatively, a cooling agent may be guided through at least one the at least one second stage heat exchanger and/or at least one the at least one third stage heat exchanger which cooling agent is in thermal contact with the LNG released from the LNG tank.

Frozen CO₂ released from the third cooling stage may be guided through at least one of the at least one second stage heat exchanger and/or may be in thermal contact with a cooling agent, which is guided through at least one the at least one second stage heat exchanger.

Frozen CO₂ may be used to precool the exhaust gas in the second cooling stage.

During this process frozen CO₂ is conditioned for storage and warms up to a temperature, which is appropriate for storing. Frozen CO₂ released from the third cooling stage and/or from the second cooling stage if used as a cooling agent may be compressed to a pressure exceeding the pressure at the triple point of 5.1bar.

The frozen CO₂ may be heated up and fused by heat extracted from the exhaust gas, for example in the second cooling stage. The resultant liquid CO₂ may be heated up to a temperature close to the triple point of -56°C and than be stored in a cryogenic CO₂ storage.

Residual exhaust gas leaving the third cooling stage is, accor-ing to the invention, guided into the second cooling stage and. Hence, the cold energy of the residual exhaust while heating up to environmental temperature is used to precool the exhaust gas in the second cooling stage.

The exhaust gas may be dehumidified, in particular upstream the second cooling stage and/or downstream the first cooling stage.

At least a part of the exhaust gas leaving the cylinder may be recirculated, for example 0-60%, preferably 35%-55%. The recirculated exhaust gas may be branched off upstream the first cooling stage, more preferably downstream a turbine of a turbocharger.

In the following, the invention is further explained in embodiments by means of the following figures:

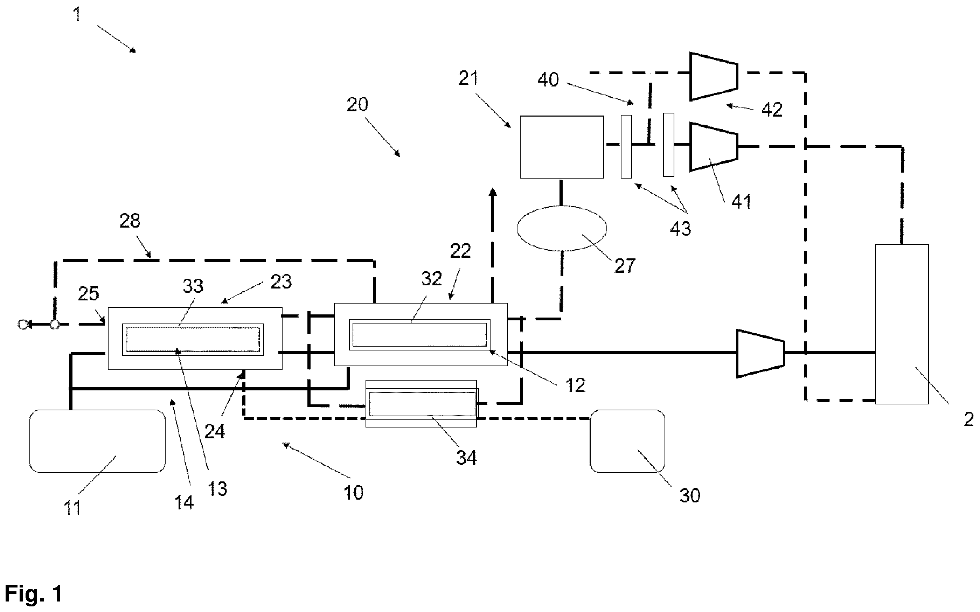

- Figure 1:: shows a schematic view of an example of an internal combustion engine.

Figure 1 shows a schematic view of an example of an internal combustion engine 1.

The internal combustion engine 1 comprises a LNG supply system 10 having an LNG tank 11 for hosting LNG, preferably at a temperature of below -150°C, a low temperature heat exchanger 13 and an upper temperature heat exchanger 12.

The internal combustion engine 1 comprises an exhaust gas cooling system 20 with a first cooling stage 21, a second cooling stage 22 and a third cooling stage 23.

Exhaust gas leaving the cylinder 2 passes a turbine 41 of a turbocharger 42. Downstream the turbine 41 a part of the exhaust gas may be recirculated by a EGR system 40 to the air inlet of the cylinder 2. The EGR system may comprise a cooler.

Upstream the first cooling stage 21 the internal combustion engine 1 may comprise further devices 43, for example a selective catalytic reduction device, a a heat recovery steam generator and or a duct firing device, which typically reduce the temperature of the exhaust gas.

A portion of the exhaust gas may as well be released into the environment and not be guided into the exhaust gas cooling system 20 (not shown in the figures).

The other part of the exhaust gas is guided into the first cooling stage 21, which is adapted to use water, for example sea water, as a cooling medium.

Downstream the first cooling stage 21 the exhaust gas is dehumidified in a dehumidification device 27.

Subsequently the exhaust gas is guided to the second cooling stage 22 for cooling the exhaust gas, preferably to a temperature below -100°C.

In the second cooling stage 22 the exhaust gas is the exhaust gas is split and a first part is directed to a second stage heat exchanger 32 and a second part is directed to a further heat exchanger 34.

In this example, the second stage heat exchanger 32 is an upper temperature heat exchanger 12 of the LNG supply system 10 wherein LNG is heated up to temperatures of -40°C to 20°C. Alternatively, the second stage heat exchanger 32 may be in thermal contact with the upper temperature heat exchanger 12 via a cooling agent.

Additionally, LNG released from the LNG tank 11 may also be directly guided to the second stage heat exchanger 32 via piping system 14. By setting the percentage of LNG from the LNG tank 11 and the prewarmed LNG released from the upper temperature heat exchanger 12, the cooling temperature of the second stage heat exchanger 32 can be controlled.

Valves (not shown in the figure) of the piping system 14 can be set by a control unit (not shown in the figure) to control the cooling temperature.

Additionally, cool energy of residual exhaust gas released from the third cooling stage 23 can be used in the second cooling stage 22. Residual exhaust gas released from the third cooling stage 23 may be discharged into the environment or preferably may be guided into the second cooling stage 22, in particular into the second stage heat exchanger 32, as an additionally cooling agent via a piping system 28. The residual exhaust gas may be discharged into the environment after having passed the second cooling stage 22.

In the further heat exchanger 34 the cold energy of the frozen CO₂, released from the third cooling stage 23, is used.

Exhaust gas leaving the second stage heat exchanger 32 and the further heat exchanger 34 is merged and subsequently cooled in the third cooling stage 23, preferably to a temperature of below -106°C, for example to temperature in the range of -140°C to -125°C. CO₂ is frozen out from the exhaust gas, and frozen CO₂ is separated from residual exhaust gas.

The third cooling stage 23 comprises a third stage heat exchanger 33, which in this example is the low temperature heat exchanger 13 of the LNG supply system, wherein LNG is evaporated.

Alternatively, the third stage heat exchanger 33 may be in thermal contact with the low temperature heat exchanger 13 via a cooling agent.

The third cooling stage 23 comprising a first outlet 24 for frozen CO₂ and a second outlet 25 for residual exhaust gas.

Frozen CO₂ cryogenic CO₂ released from the third cooling stage 23 und used in the further heat exchanger is stored in a storage tank 30, preferably adapted to store CO₂ at a temperature close to the triple point.

The second stage heat exchanger 32 and the third stage heat exchanger 33 may use the cold energy of LNG released from the LNG tank.

Alternatively, frozen CO₂, released from the third cooling stage 23, may directly be guided through second stage heat exchanger 32 (not shown in the figure) and the further heat exchanger 34 is not necessary.

## Claims

1. An internal combustion engine (1) having at least one cylinder (2), preferably a large vessel engine with at least one cylinder having an inner diameter of at least 200mm, comprising
- an LNG supply system (10) having an LNG tank (11) for hosting LNG, preferably at a temperature of below - 150°C;
- an exhaust gas cooling system (20) having
- a first cooling stage (21) for cooling down exhaust gas, preferably adapted to use water, for example sea water, as a cooling medium,
- a second cooling stage (22) for cooling exhaust gas, preferably to a temperature of below -100°C, arranged downstream the first cooling stage (21) and comprising at least one second stage heat exchanger (32),
- a third cooling stage (23) for further cooling exhaust gas, preferably to a temperature of below - 106°C, adapted to freeze out CO₂ from the exhaust gas and to separated frozen CO₂ from residual exhaust gas, arranged downstream the second cooling stage (22) and comprising at least one third stage heat exchanger (33), and the third cooling stage (23) comprising a first outlet (24) for frozen CO₂ and a second outlet (25) for residual exhaust gas,
wherein at least one of the at least one second stage heat exchanger (32) and/or at least one of the at least one third stage heat exchanger (33) are adapted to use cold energy of LNG, preferably released from the LNG tank, and
wherein the exhaust gas cooling system (20) comprises a residual gas piping system (28) for allowing residual exhaust gas leaving the third cooling stage (23) to be guided into the second cooling stage (22), such that cold energy from the residual exhaust gas leaving the third cooling stage (23) is used in the second cooling stage (22).

2. The internal combustion engine according to claim 1, wherein the LNG supply system (10) comprises a low temperature heat exchanger (13), wherein the low temperature heat exchanger (13) is one of the at least one third stage heat exchanger (33) or is in thermal contact with at least one of the at least one third stage heat exchanger (33) via a cooling agent.

3. The internal combustion engine according to any one of the claims 1 to 2, wherein LNG supply system (10) comprises an upper temperature heat exchanger (12), wherein the upper temperature heat exchanger is one of the at least one second stage heat exchanger (32) or is in thermal contact with at least one of the at least one second stage heat exchanger (32) via a cooling agent.

4. The internal combustion engine according to claim 2 and claim 3, wherein the LNG supply system (10) comprises a piping system (14) with a branch, for directly connecting the LNG tank (11) selectively to the low temperature heat exchanger (13) and/or to the upper temperature heat exchanger (12).

5. The internal combustion engine according to any one of the previous claims, wherein the second cooling stage (22) comprises at least one further heat exchanger (34) which is adapted to use cold energy of frozen CO₂ released from the third cooling stage (23).

6. The internal combustion engine according to any one of the previous claims, wherein the exhaust gas cooling system (20) comprises a dehumidification device (27), preferably fluidly arranged between the first and the second stage.

7. The internal combustion engine according to any one of the previous claims, wherein the internal combustion engine comprises a split device for branching off exhaust gas not to be guided into the exhaust gas cooling system (20) and/or
an EGR system (40), preferably adapted to branch off exhaust gas upstream the first cooling stage (21), more preferably a low pressure EGR system.

8. The internal combustion engine according to any one of the previous claims, wherein the internal combustion engine comprises a cryogenic CO₂ storage tank (30), preferably adapted to store CO₂ released from the third cooling stage (23) at a temperature close to the triple point.

9. A method for operating an internal combustion engine having at least one cylinder (2), preferably a large vessel engine with at least one cylinder (2) having an inner diameter of at least 200mm, preferably according to one of the previous claims, which is powered by LNG and comprises an LNG tank (11) for hosting LNG at a temperature of below -150°C, comprising the steps of
- cooling exhaust gas released from the cylinder (2) in a first cooling stage (21), preferably to a temperature of 20°C - 30°C, preferably using sea water as a cooling medium,
- subsequently cooling the exhaust gas in a second cooling stage (22) comprising at least one second stage heat exchanger (32), preferably to a temperature of below -100°C,
- subsequently cooling the exhaust gas in a third cooling stage (23) comprising at least one third stage heat exchanger (33), preferably to a temperature of below -106°C, wherein CO₂ is frozen out the exhaust gas and frozen CO₂ is separated from residual exhaust gas, wherein the residual exhaust gas preferably has a CO₂ concentration of less than 8% (molar concentration),
wherein at least one of the at least one second stage heat exchanger (32) and/or at least one of the at least one first stage heat exchanger (33) uses cold energy of LNG released from the LNG tank (11) and wherein residual exhaust gas leaving the third cooling stage (23) is guided into the second cooling stage (22), such that the residual exhaust gas leaving the third cooling stage (23) is used in the second cooling stage (22).

10. The method according to claim 9, wherein LNG is guided through at least one the at least one second stage heat exchanger (32) and/or at least one of the at least one third stage heat exchanger (33)
and/or
a cooling agent is guided through at least one of the at least one second stage heat exchanger (32) and/or at least one the at least one third stage heat exchanger (33) which cooling agent is in thermal contact with the LNG released from the LNG tank (11).

11. The method according to any one of the claims 9 to 10, wherein frozen CO₂ released from the third cooling stage (23) is guided through at least one of the at least one second stage heat exchanger (32) and/or is in thermal contact with a cooling agent, which is guided through at least one of the at least one second stage heat exchanger (32).

12. The method according to any one of the claims 9 to 11, wherein the exhaust gas is dehumidified, in particular upstream the second cooling stage (22) and/or downstream the first cooling stage (21).

13. The method according to any one of the claims 9 to 12, wherein exhaust gas is recirculated, preferably branched off upstream the first cooling stage (21), more preferably downstream a turbine (41) of a turbocharger (42).

## Patentansprüche

1. Brennkraftmaschine (1) mit mindestens einem Zylinder (2), vorzugsweise ein großer Schiffsmotor mit mindestens einem Zylinder mit einem Innendurchmesser von mindestens 200 mm, umfassend
- ein LNG-Versorgungssystem (10) mit einem LNG-Tank (11) zur Aufnahme von LNG, vorzugsweise mit einer Temperatur von unter -150° C;
- ein Abgaskühlsystem (20) mit
- einer ersten Kühlstufe (21) zur Abkühlung des Abgases, die vorzugsweise Wasser, z. B. Seewasser, als Kühlmedium verwenden kann,
- einer zweiten Kühlstufe (22 ) zur Abkühlung von Abgas, vorzugsweise auf eine Temperatur von unter - 100° C, die der ersten Kühlstufe (21) nachgeschaltet ist und mindestens einen Wärmetauscher (32) der zweiten Stufe umfasst,
- eine dritte Kühlstufe (23) zur weiteren Abkühlung des Abgases, vorzugsweise auf eine Temperatur von unter -106° C, die geeignet ist zum Ausfrieren von CO₂ aus dem Abgas und zur Abtrennung von gefrorenem CO₂ aus dem Restabgas, die stromabwärts der zweiten Kühlstufe (22) angeordnet ist und mindestens einen Wärmetauscher der dritten Stufe (33) umfasst, und die dritte Kühlstufe (23) einen ersten Auslass (24) für gefrorenes CO₂ und einen zweiten Auslass (25) für Restabgas umfasst,
wobei mindestens einer von dem mindestens einen Wärmetauscher (32) der zweiten Stufe und/oder mindestens einer von dem mindestens einen Wärmetauscher (33) der dritten Stufe geeignet ist, Kälteenergie von LNG zu nutzen, die vorzugsweise aus dem LNG-Tank abgegeben wird, und
wobei das Abgaskühlsystem (20) ein Restgasleitungssystem (28) umfasst, um zu ermöglichen, dass aus der dritten Kühlstufe (23) austretendes Restabgas in die zweite Kühlstufe (22) geleitet wird, so dass Kälteenergie aus dem aus der dritten Kühlstufe (23) austretenden Restabgas in der zweiten Kühlstufe (22) genutzt wird.

2. Brennkraftmaschine nach Anspruch 1, wobei das LNG-Versorgungssystem (10) einen Niedertemperatur-Wärmetauscher (13) umfasst, wobei der Niedertemperatur-Wärmetauscher (13) einer der mindestens einen Wärmetauscher (33) der dritten Stufe ist oder über ein Kühlmittel mit mindestens einem der mindestens einen Wärmetauscher (33) der dritten Stufe in thermischem Kontakt steht.

3. Brennkraftmaschine nach einem der Ansprüche 1 bis 2, wobei das LNG-Versorgungssystem (10) einen Obertemperatur-Wärmetauscher (12) umfasst, wobei der Obertemperatur-Wärmetauscher einer des mindestens einen Wärmetauschers (32) der zweiten Stufe ist oder über ein Kühlmittel in thermischem Kontakt mit mindestens einem des mindestens einen Wärmetauschers (32) der zweiten Stufe steht.

4. Brennkraftmaschine nach Anspruch 2 und Anspruch 3, wobei das LNG-Versorgungssystem (10) ein Rohrleitungssystem (14) mit einer Abzweigung umfasst, um den LNG-Tank (11) wahlweise direkt mit dem Niedertemperatur-Wärmetauscher (13) und/oder mit dem Obertemperatur-Wärmetauscher (12) zu verbinden.

5. Brennkraftmaschine nach einem der vorhergehenden Ansprüche, wobei die zweite Kühlstufe (22) mindestens einen weiteren Wärmetauscher (34) umfasst, der geeignet ist, Kälteenergie von gefrorenem CO₂ zu nutzen, das von der dritten Kühlstufe (23) abgegeben wird.

6. Brennkraftmaschine nach einem der vorhergehenden Ansprüche, wobei das Abgaskühlsystem (20) eine Entfeuchtungseinrichtung (27) umfasst, die vorzugsweise fluidisch zwischen der ersten und der zweiten Stufe angeordnet ist.

7. Brennkraftmaschine nach einem der vorhergehenden Ansprüche, wobei die Brennkraftmaschine eine Splitvorrichtung zum Abzweigen von nicht in das Abgaskühlsystem (20) zu führendem Abgas umfasst
und/oder
ein AGR-System (40), vorzugsweise zum Abzweigen von Abgas stromaufwärts der ersten Kühlstufe (21), besonders bevorzugt ein Niederdruck-AGR-System.

8. Brennkraftmaschine nach einem der vorhergehenden Ansprüche, wobei die Brennkraftmaschine einen kryogenen CO₂-Speicher (30) umfasst, der vorzugsweise dazu geeignet ist, aus der dritten Kühlstufe (23) freigesetztes CO₂ bei einer Temperatur nahe dem Tripelpunkt zu speichern.

9. Verfahren zum Betreiben einer Brennkraftmaschine mit mindestens einem Zylinder (2), vorzugsweise eines großen Schiffsmotors mit mindestens einem Zylinder (2) mit einem Innendurchmesser von mindestens 200 mm, vorzugsweise nach einem der vorhergehenden Ansprüche, der mit LNG betrieben wird und einen LNG-Tank (11) zur Aufnahme von LNG bei einer Temperatur von unter -150° C umfasst,
umfassend die Schritte
- Abkühlen des aus dem Zylinder (2) austretenden Abgases in einer ersten Kühlstufe (21), vorzugsweise auf eine Temperatur von 20°C - 30°C, vorzugsweise unter Verwendung von Meerwasser als Kühlmedium,
- anschließendes Abkühlen des Abgases in einer zweiten Kühlstufe (22), die mindestens einen Wärmetauscher (32) der zweiten Stufe umfasst, vorzugsweise auf eine Temperatur von unter -100° C,
- anschließendes Abkühlen des Abgases in einer dritten Kühlstufe (23) mit mindestens einem Wärmetauscher (33) der dritten Stufe, vorzugsweise auf eine Temperatur von unter -106° C, wobei CO₂ aus dem Abgas ausgefroren und gefrorenes CO₂ vom Restabgas abgetrennt wird, wobei das Restabgas vorzugsweise eine CO₂-Konzentration von weniger als 8% (molare Konzentration) aufweist,
wobei mindestens einer der mindestens einen Wärmetauscher der zweiten Stufe (32) und/oder mindestens einer der mindestens einen Wärmetauscher der ersten Stufe (33) Kälteenergie von aus dem LNG-Tank (11) freigesetztem LNG nutzt und wobei Restabgas, das die dritte Kühlstufe (23) verlässt, in die zweite Kühlstufe (22) geleitet wird, so dass das Restabgas, das die dritte Kühlstufe (23) verlässt, in der zweiten Kühlstufe (22) verwendet wird.

10. Verfahren nach Anspruch 9, wobei
LNG durch mindestens einen der mindestens einen Wärmetauscher der zweiten Stufe (32) und/oder mindestens einen der mindestens einen Wärmetauscher der dritten Stufe (33) geleitet wird,
und/oder
ein Kühlmittel durch mindestens einen des mindestens einen Wärmetauschers der zweiten Stufe (32) und/oder mindestens einen des mindestens einen Wärmetauschers der dritten Stufe (33) geleitet wird, wobei das Kühlmittel in thermischem Kontakt mit dem aus dem LNG-Tank (11) freigegebenen LNG steht.

11. Verfahren nach einem der Ansprüche 9 bis 10, wobei aus der dritten Kühlstufe (23) freigesetztes gefrorenes CO₂d urch mindestens einen des mindestens einen Wärmetauschers der zweiten Stufe (32) geleitet wird und/oder in thermischem Kontakt mit einem Kühlmittel steht, das durch mindestens einen des mindestens einen Wärmetauschers der zweiten Stufe (32) geleitet wird.

12. Verfahren nach einem der Ansprüche 9 bis 11, wobei das Abgas entfeuchtet wird, insbesondere stromaufwärts der zweiten Kühlstufe (22) und/oder stromabwärts der ersten Kühlstufe (21).

13. Verfahren nach einem der Ansprüche 9 bis 12, wobei das Abgas rezirkuliert wird, vorzugsweise stromaufwärts der ersten Kühlstufe (21), besonders bevorzugt stromabwärts einer Turbine (41) eines Turboladers (42) .

## Revendications

1. Moteur à combustion interne (1) comprenant au moins un cylindre (2), de préférence un moteur de grand navire avec au moins un cylindre ayant un diamètre intérieur d'au moins 200 mm, comprenant
- un système d'alimentation en GNL (10) comportant un réservoir de GNL (11) destiné à contenir du GNL, de préférence à une température inférieure à -150°C;
- un système de refroidissement des gaz d'échappement (20) comportant
- un premier étage de refroidissement (21) destiné à abaisser la température des gaz d'échappement, de préférence adapté pour utiliser de l'eau, notamment de l'eau de mer, comme agent de refroidissement,
- un deuxième étage de refroidissement (22) destiné à abaisser la température des gaz d'échappement, de préférence à une température inférieure à -100°C, disposé en aval du premier étage de refroidissement (21) et comprenant au moins un échangeur thermique de deuxième étage (32),
- un troisième étage de refroidissement (23) pour abaisser davantage la température des gaz d'échappement, de préférence à une température inférieure à -106°C, adapté à congeler le CO₂ contenu dans les gaz d'échappement et à séparer le CO₂ congelé des gaz d'échappement résiduels, ledit troisième étage disposé en aval du deuxième étage de refroidissement (22) et comprenant au moins un échangeur thermique de troisième étage (33), et le troisième étage de refroidissement (23) comprenant une première sortie (24) pour le CO₂ congelé et une deuxième sortie (25) pour les gaz d'échappement résiduels,
dans lequel au moins l'un desdits échangeurs thermique de deuxième étage (32) et/ou au moins un des échangeurs thermique de troisième étage (33) est adapté pour utiliser l'énergie froide du GNL, de préférence libérée depuis le réservoir de GNL, et
dans lequel le système de refroidissement des gaz d'échappement (20) comprend un système de conduites pour gaz résiduel (28) permettant de réintroduire les gaz d'échappement résiduels quittant le troisième étage de refroidissement (23) dans le deuxième étage de refroidissement (22), de sorte que l'énergie froide du gaz d'échappement résiduel en sortie du troisième étage de refroidissement (23) soit utilisée dans le deuxième étage de refroidissement (22).

2. Le moteur à combustion interne selon la revendication 1, dans lequel le système d'alimentation en GNL (10) comprend un échangeur thermique basse température (13), ledit échangeur thermique basse température (13) étant l'un desdits échangeurs thermique de troisième étage (33) ou étant en contact thermique avec au moins un desdits échangeurs thermique de troisième étage (33) par l'intermédiaire d'un agent de refroidissement.

3. Le moteur à combustion interne selon l'une quelconque des revendications 1 à 2, dans lequel le système d'alimentation en GNL (10) comprend un échangeur thermique haute température (12), ledit échangeur thermique haute température étant au moins un desdits échangeurs thermique de deuxième étage (32) ou étant en contact thermique avec au moins un desdits échangeurs thermique de deuxième étage (32) par l'intermédiaire d'un agent de refroidissement.

4. Le moteur à combustion interne selon la revendication 2 et 3, dans lequel le système d'alimentation en GNL (10) comprend un système de conduites (14) comprenant avec un embranchement, permettant de raccorder directement le réservoir de GNL (11), de manière sélective, à l'échangeur thermique basse température (13) et/ou à l'échangeur thermique haute température (12).

5. Le moteur à combustion interne selon l'une quelconque des revendications précédentes, dans lequel le deuxième étage de refroidissement (22) comprend au moins un échangeur thermique supplémentaire (34) adapté à utiliser l'énergie froide du CO₂ congelé libéré par le troisième étage de refroidissement (23).

6. Le moteur à combustion interne selon l'une quelconque des revendications précédentes, dans lequel le système de refroidissement des gaz d'échappement (20) comprend un dispositif de déshumidification (27), de préférence agencé de manière fluide entre le premier étage de refroidissement et le deuxième étage de refroidissement.

7. Le moteur à combustion interne selon l'une quelconque des revendications précédentes, dans lequel le moteur à combustion interne comprend un dispositif de séparation permettant de détourner une partie des gaz d'échappement ne devant pas être guidés dans le système de refroidissement des gaz d'échappement (20)
et/ou
un système EGR (40), de préférence adapté à dériver des gaz d'échappement en amont du premier étage de refroidissement (21), de préférence un système EGR à basse pression.

8. Le moteur à combustion interne selon l'une quelconque des revendications précédentes, dans lequel le moteur à combustion interne comprend un réservoir de stockage cryogénique de CO₂ (30), de préférence adapté à stocker le CO₂ libéré par le troisième étage de refroidissement (23) à une température proche du point triple.

9. Procédé de fonctionnement d'un moteur à combustion interne comprenant au moins un cylindre (2), de préférence un moteur de grand navire comprenant au moins un cylindre (2) d'un diamètre intérieur d'au moins 200mm, de préférence selon l'une quelconque des revendications précédentes, fonctionnant au GNL et comprenant un réservoir de GNL (11) destiné à contenir du GNL à une température inférieure à - 150°C,
comprenant les étapes suivantes
- refroidir les gaz d'échappement émis par le cylindre (2) dans un premier étage de refroidissement (21), de préférence à une température de 20°C - 30°C, de préférence en utilisant de l'eau de mer comme agent de refroidissement,
- refroidir ensuite les gaz d'échappement dans un deuxième étage de refroidissement (22) comprenant au moins un échangeur thermique de deuxième étage (32), de préférence à une température inférieure à -100°C,
- refroidir ensuite les gaz d'échappement dans un troisième étage de refroidissement (23) comprenant au moins un échangeur thermique de troisième étage (33), de préférence à une température inférieure à
- 106°C, le CO₂ contenu dans les gaz d'échappement étant congelé et séparé des gaz d'échappement résiduels, les gaz d'échappement résiduels ayant de préférence une concentration en CO₂ inférieure à 8 % (concentration molaire),
dans lequel au moins un desdits échangeurs thermique du deuxième étage (32) et/ou au moins un desdits échangeurs thermique du premier étage (33) utilise l'énergie froide du GNL libéré du réservoir de GNL (11) et dans lequel les gaz d'échappement résiduels quittant le troisième étage de refroidissement (23) sont dirigés vers le deuxième étage de refroidissement (22), de sorte que le gaz d'échappement résiduel quittant le troisième étage de refroidissement (23) est utilisé dans le deuxième étage de refroidissement (22).

10. Procédé selon la revendication 9, dans lequel le GNL circule à travers au moins un desdits échangeurs thermique du deuxième étage (32) et/ou au moins un desdits échangeurs thermique du troisième étage (33)
et/ou
dans lequel un agent de refroidissement circule à travers au moins un desdits échangeurs thermique de deuxième étage (32) et/ou au moins un desdits échangeurs thermique de troisième étage (33), ledit agent de refroidissement est en contact thermique avec le GNL libéré par le réservoir de GNL (11).

11. Procédé selon l'une quelconque des revendications 9 à 10, dans lequel le CO₂ congelé libéré par le troisième étage de refroidissement (23) est guidé à travers au moins un desdits échangeurs thermique du deuxième étage (32) et/ou est en contact thermique avec un agent de refroidissement, qui lequel circule à travers au moins un desdits échangeurs thermique du deuxième étage (32).

12. Procédé selon l'une quelconque des revendications 9 à 11, dans lequel les gaz d'échappement sont déshumidifiés, en particulier en amont du deuxième étage de refroidissement (22) et/ou en aval du premier étage de refroidissement (21).

13. Procédé selon l'une quelconque des revendications 9 à 12, dans lequel les gaz d'échappement sont recirculés, de préférence déviés en amont du premier étage de refroidissement (21), et plus préférablement en aval d'une turbine (41) d'un turbocompresseur (42).
